# FASCICULE DE BREVET EUROPEEN

(11) **EP 0 886 907 B1**
(45) Date de publication et mention de la délivrance du brevet: **04.12.2002**
(21) Numéro de dépôt: 97914393.0
(22) Date de dépôt: 13.03.1997
(51) Int. Cl.: H02K 7/06, F16H 25/20

(54) **VERIN ELECTRIQUE COMPACT**
KOMPAKTER ELEKTRISCHER STELLANTRIEB
COMPACT ELECTRIC ACTUATOR

(30) Priorité: 13.03.1996 FR 9603172
(43) Date de publication de la demande: 30.12.1998
(73) Titulaire: Wernest, 54800 Jarny (FR)
(72) Inventeur: WEBER, Ernest, F-57158 Montigny-lès-Metz (FR)
(74) Mandataire: Bouget, Lucien
(86) Numéro de dépôt international: FR9700454
(87) Numéro de publication internationale: WO97034356

(56) Documents cités:
- DE-C- 3 538 710
- DE-U- 7 215 209
- DE-U- 9 412 104
- US-A- 3 751 998
- US-A- 5 117 700

## Description

La présente invention a pour objet un vérin électrique, du type comprenant un moteur électrique, un corps tubulaire comprenant un piston et des moyens de liaison entre le moteur et le piston.

Les vérins électriques utilisés jusqu'à présent sont actionnés par un moteur électrique placé à l'extérieur du corps du vérin, qui assure, par l'intermédiaire d'un réducteur, le mouvement de rotation d'une tige filetée entraînant le piston du vérin.

Ces vérins sont encombrants, perméables en raison de leur manque d'étanchéité, et fragiles du fait que la force est transmise au piston par une tige filetée. En effet, il en résulte un risque de flambage de la tige, lorsque le vérin travaille en compression avec une course élevée.

L'étanchéité aux poussières, aux intempéries et à l'humidité est difficilement réalisable du fait que le vérin est constitué en deux parties.

Le document DE-C-35 38710 décrit un vérin télescopique selon l'art antérieur dans lequel le moteur electrique est situé à l'intérieur du verin.

L'invention a pour but de proposer un vérin électrique agencé de manière à éliminer ces inconvénients.

L'invention est relative à un vérin électrique comprenant, comme seuls éléments à déplacement relatif dans une direction d'actionnement du vérin, un corps tubulaire et un piston constitué par un tube renfermant un moteur électrique monté coulissant à l'intérieur du corps tubulaire par l'intermédiaire de moyens de blocage en rotation pouvant coulisser dans une glissière de direction longitudinale du corps tubulaire et des moyens de liaison entre le moteur électrique logé à l'intérieur du piston et le piston pour rendre le moteur électrique solidaire du piston et coopérant avec la paroi intérieure du corps tubulaire pour pouvoir déplacer le piston et le moteur électrique en poussée ou en traction, le corps tubulaire et le piston étant cylindriques et le moteur étant un motoréducteur dont une extrémité est solidaire du piston et dont un arbre de sortie est adapté pour pouvoir entraîner en rotation une noix pourvue d'un filetage en prise avec un taraudage complémentaire ménagé sur la paroi intérieure du corps tubulaire.

Le motoréducteur électrique transmet sa rotation à la noix, située en bout du réducteur, et qui prend directement appui sur le taraudage du corps du vérin.

Une telle structure permet donc de supprimer la tige filetée de transmission de la force du vérin et les risques corrélatifs de flambage de celle-ci, puisque c'est le corps tubulaire du vérin qui reçoit les réactions.

D'autres particularités et avantages de l'invention apparaîtront au cours de la description qui va suivre, faite en référence aux dessins annexés qui en illustrent deux formes de réalisation à titre d'exemples non limitatifs.

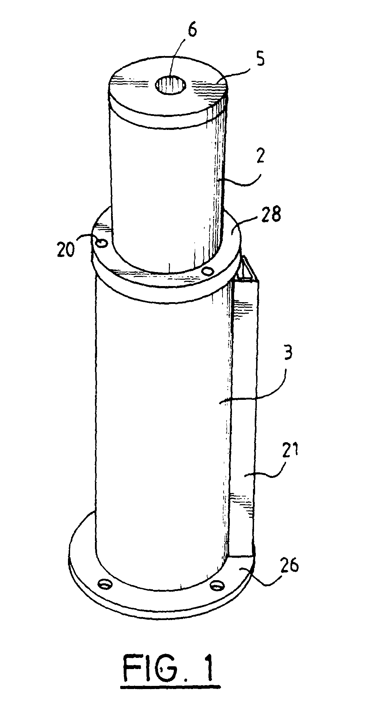

La figure 1 est une vue en perspective d'une première forme de réalisation du vérin électrique selon l'invention, représentée en position sortie du piston.

La figure 2 est une vue en coupe longitudinale axiale du vérin de la figure 1, représenté en position rétractée du piston à l'intérieur du corps.

La figure 3 est une vue en coupe transversale suivant la oigne 3-3 de la figure 2, le motoréducteur étant enlevé.

La figure 4 est une vue en élévation partielle à échelle agrandie suivant la ligne 4-4 de la figure 3 ;

La figure 5 est une vue en coupe partielle à échelle agrandie d'un détail de la figure 2.

La figure 6 est une vue analogue à la figure 2 d'une seconde forme de réalisation du vérin électrique selon l'invention.

La figure 7 est une demi-coupe suivant la ligne 7 de la figure 6.

Le vérin électrique illustré aux dessins comprend un motoréducteur électrique 1 disposé à l'intérieur d'un piston tubulaire 2 coaxialement à l'axe longitudinal XX de ce dernier. Ce piston 2, cylindrique, est lui-même monté coulissant suivant l'axe XX à l'intérieur d'un corps tubulaire 3.

Le piston 2 est fermé à l'une de ses extrémités par une bride transversale 4 à laquelle est fixée une face terminale du motoréducteur 1. Son extrémité opposée est obturée par un bouchon 5 percé d'un alésage 6 pour recevoir une attache non représentée.

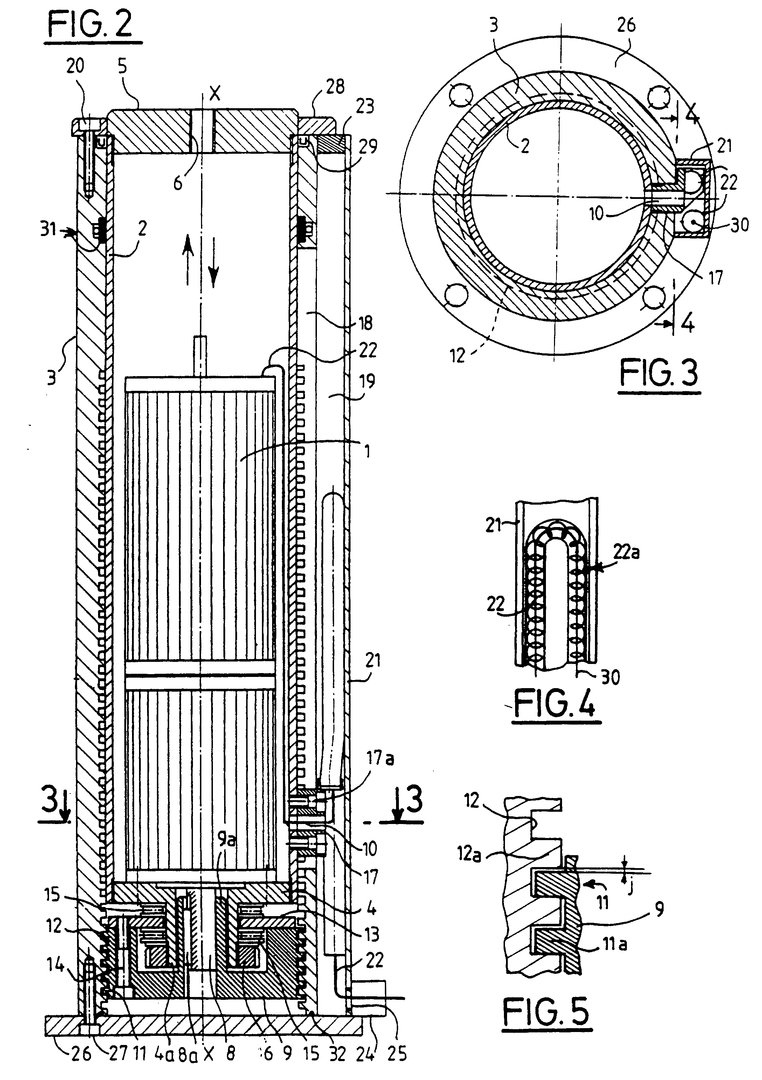

Une extrémité 8 de l'arbre de sortie du moto-réducteur 1 traverse axialement la bride 4 et est solidarisée par une clavette 8a avec une noix 9 pouvant ainsi être entraînée en rotation par le bout d'arbre 8. La noix 9 comporte un manchon central 9a enveloppant l'arbre 8 et est pourvue d'un filetage extérieur 11 en prise avec un taraudage complémentaire 12 ménagé sur la paroi intérieure du corps cylindrique 3 sur une longueur correspondant à la course prévue pour le piston 2. Le filetage 11 et le taraudage 12 ont des sections rectangulaires, de préférence carrées (figure 5), avec entre les dents conjuguées 11a, 12a, un jeu j important, c'est-à-dire de préférence de l'ordre de 0,5 mm environ. La noix 9 est fixée à un disque 13 percé d'une ouverture centrale et monté concentriquement à une collerette cylindrique centrale 4a de la bride 4 entourant le manchon 9a. La noix 9 est solidarisée avec le disque 13 par des vis longitudinales 14 dont l'une est visible à la figure 2.

Des roulements à aiguilles 15 sont interposés entre d'une part le disque 13 et d'autre part la bride 4 et une bague-écrou 16 vissée à l'extrémité de la collerette 4a. Le vérin est également équipé de moyens pour bloquer le piston cylindrique 2 en rotation par rapport au corps 3. Dans l'exemple représenté, ces moyens consistent en un plot tubulaire 17 fixé au piston 2, s'étendant transversalement à travers le corps 3 et pouvant coulisser dans une glissière longitudinale 18 du corps 3. Le plot 17 est fixé au piston 2 par des vis 17a et délimite une ouverture 10 de passage pour un fil électrique 22.

Dans la paroi du corps 3 et en regard de la glissière 18, est également logée dans un évidement longitudinal 19 une gaine 21 de protection du fil ou câble électrique 30 d'alimentation du motoréducteur 1. Le fil 30 s'étend à l'intérieur d'un ressort hélicoïdal 22 formant une boucle 22a en U dans la gaine 21. Cette gaine, de préférence profilée en U comme visible à la figure 3, s'étend longitudinalement d'une extrémité à l'autre du corps 3 auquel elle est fixée par des moyens appropriés, non représentés. Un obturateur 23 ferme la gaine 21 au niveau de la bride 28. La gaine 21 reçoit une partie de la longueur du fil électrique 30. Les deux brins de la boucle 22a s'étendent dans un plan sensiblement perpendiculaire à celui de la figure 2, comme visible à la figure 3. Ainsi, le fil 30 s'étend d'abord de l'extrémité du motoréducteur 1 tournée vers le bouchon 5, puis entre le motoréducteur 1 et le piston 2 jusqu'au plot tubulaire 17 qu'il traverse, par son ouverture 10, pour entrer dans la gaine 21. Le fil 30 traverse une ouverture de passage 25 dans la gaine 21 et un presse-étoupe 24 pour être relié au secteur.

Du côté opposé au bouchon 5 du piston 2, le corps 3 est obturé par un couvercle 26 fixé au corps 3 par exemple par des vis 27. Le vérin est par ailleurs muni de moyens d'étanchéité. Dans l'exemple représenté, l'extrémité du corps 3 contigüe au bouchon terminal 5 est pourvue d'une bague 28 fixée au corps 3 par des vis 20. Un joint d'étanchéité 29 est interposé entre la bague 28, l'extrémité du corps 3 et le piston 2, ce joint 29 étant logé dans une gorge correspondante du corps 3. Une seconde bague d'étanchéité 31 et de guidage du piston 2 est logée dans la paroi intérieure du corps 3, afin de compléter l'étanchéité avec le piston 2.

Un autre joint d'étanchéité 32 est avantageusement interposé entre le couvercle 26 et le corps 3, en étant logé dans une gorge formée dans l'extrémité du corps 3.

Le vérin électrique qui vient d'être décrit fonctionne de la manière suivante.

Le fil 30 étant branché sur le secteur d'alimentation électrique, et le motoréducteur 1 ainsi que le piston 2 étant supposés dans leurs positions inférieures extrêmes, représentées à la figure 2, lorsque le motoréducteur 1 est actionné dans le sens approprié, son bout d'arbre 8 entraîne en rotation la noix 9. Le filetage 11 glisse avec jeu dans le taraudage 12 en exerçant une poussée longitudinale sur le disque 13. Cette poussée est transmise à la bride 4 via les roulements à aiguilles 15, et donc au piston tubulaire 2, qui commence à sortir du corps 3 avec son attache 7 et le moto-réducteur intérieur 1.

Durant le déplacement en translation du piston 2, le fil 30 est entraîné de sorte que la boucle formée par ce fil dans la gaine 21 se dévide progressivement par le plot transversal 17, en restant protégé par la gaine-ressort 22, tandis que corrélativement ce plot 17 se déplace en translation dans la glissière 18.

Lorsque le motoréducteur 1 est actionné dans le sens opposé, la noix 9 tourne en sens inverse et rétracte donc le piston 2 à l'intérieur du corps 3, tandis que la boucle formée par le fil 30 dans la gaîne 21 se reforme progressivement, et que le plot 17 revient à sa position initiale. L'enroulement en spirale du fil 30 représenté uniquement à la Fig. 4, lui confère une certaine élasticité qui facilite la reformation de la boucle 22a durant les courses retour du piston 2.

La noix 9 est réalisée avantageusement en un matériau dur tel que l'acier, tandis que le corps tubulaire 3 est formé en un matériau composite à haute tenue mécanique et très bas coefficient de glissement. Un tel couple de matériaux assure un glissement satisfaisant entre la noix 9 et le corps 3. En outre, afin d'éviter tout risque de coincement de la noix 9 dans le corps 3, il est nécessaire que le jeu important j précité soit réservé entre les dents 11a et 12a (figure 5). En effet, un jeu faible (par exemple 0,1 mm), serait susceptible d'entraîner un coincement de la noix 9 dans le corps 3 et donc le blocage du vérin.

De plus, le fait que le filet 11 et le taraudage 12 présentent des dents 11a, 12a à section rectangulaire, de préférence carrée, présente l'avantage qu'en cas de panne de l'alimentation électrique, la noix 9 reste dans sa position à l'intérieur du corps 3, et ne redescend pas ; le piston 2 reste alors dans la position où il se trouve.

Le logement du modoréducteur 1 à l'intérieur du piston 2 réduit considérablement l'encombrement de l'ensemble du vérin et le rend particulièrement compact. De plus, comme déjà indiqué cette transformation permet de supprimer la tige filetée des vérins électriques classiques et donc le risque corrélatif de flambage de cette tige.

Le fait que le moteur 1 soit dans le piston 2 rend également le fonctionnement du vérin particulièrement silencieux.

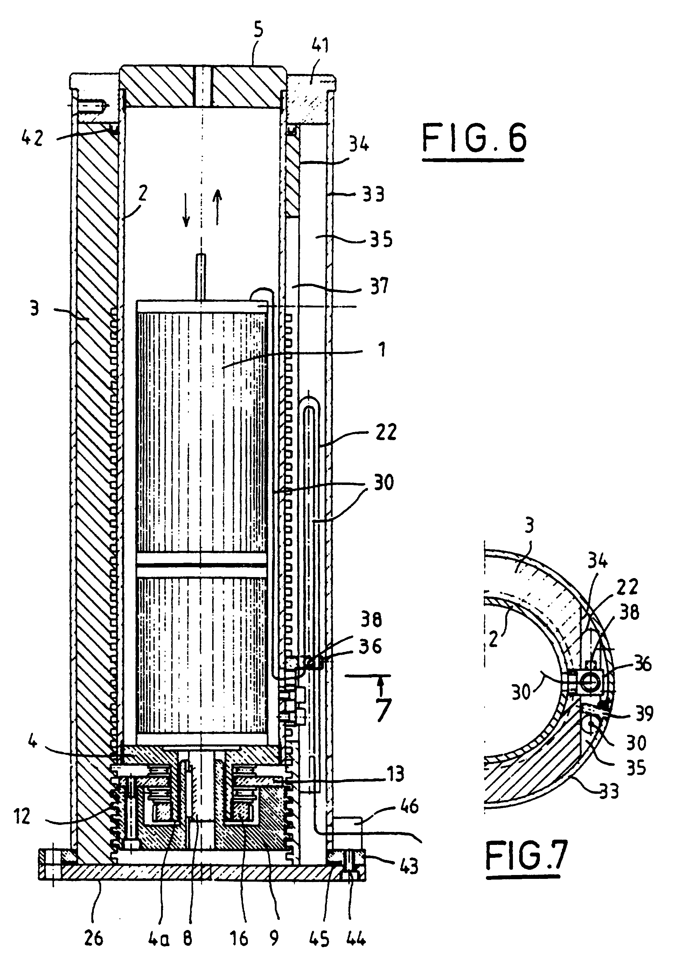

Le second mode de réalisation du vérin, illustré aux figures 6 et 7, comprend une chemise cylindrique extérieure 33 enveloppant le corps 3. Sur ce dernier est réalisé un méplat longitudinal 34 délimitant avec le secteur correspondant de la chemise 33 un espace 35 qui contient le ressort 22 à l'intérieur duquel passe le fil électrique 30 formant une boucle comme dans la réalisation précédente.

Le ressort 22 traverse un plot 36 fixé au piston 2 et pouvant coulisser dans un dégagement longitudinal 37 du corps 3. Une vis 38 montée sur le plot 36 maintient le ressort 22 solidaire de ce dernier, tandis qu'une seconde vis 39 traversant la chemise 33 maintient le ressort 22 en place dans l'espace 35.

A son extrémité supérieure (le vérin étant supposé vertical) le vérin comporte une bague 41 d'obturation de l'intervalle annulaire entre la chemise 33 et le bouchon 5. L'étanchéité est assurée par un joint 42 logé entre le corps 3 et la bague 41.

A l'extrémité inférieure du vérin, une bride 43 est fixée à la chemise 33 et au couvercle 26 par des vis 44, un joint d'étanchéité 45 étant interposé entre le couvercle 26 et la bride 43.

Le fil électrique 30 traverse de manière étanche un presse-étoupe 46 au voisinage de la bride 43.

La chemise extérieure 33, de préférence en matière composite, remplit avantageusement une fonction d'isolation phonique du vérin.

Ce vérin peut être aisément miniaturisé pour être adapté à des applications appropriées, ses possibilités d'application étant par ailleurs universelles.

## Revendications

1. Vérin électrique comprenant, comme seuls éléments à déplacement relatif dans une direction d'actionnement du vérin, un corps tubulaire fixe (3) et un piston mobile (2) constitué par un tube renfermant un moteur électrique (1) monté coulissant à l'intérieur du corps tubulaire (3) par l'intermédiaire de moyens de blocage en rotation pouvant coulisser dans une glissière de direction longitudinale du corps tubulaire (3) et des moyens de liaison (4, 9, 13) entre le moteur électrique (1) logé à l'intérieur du piston (2) et le piston (2) pour rendre le moteur électrique (1) solidaire du piston (2) et coopérant avec la paroi intérieure du corps tubulaire (3) pour pouvoir déplacer le piston (2) et le moteur électrique (1) en poussée ou en traction, le corps tubulaire (3) et le piston (2) étant cylindriques et le moteur (1) étant un motoréducteur dont une extrémité est solidaire du piston (2) et dont un arbre de sortie (8) est adapté pour pouvoir entraîner en rotation une noix (9) pourvue d'un filetage (11) en prise avec un taraudage complémentaire (12) ménagé sur la paroi intérieure du corps tubulaire (3).

2. Vérin électrique selon la revendication 1, **caractérisé en ce que** les dents (11a, 12a) du filetage (11) de la noix (9) et du taraudage complémentaire (12) du corps (3) ont des sections rectangulaires, avec entre les dents des filets un jeu (j) de préférence de l'ordre de 0,5 mm environ.

3. Vérin électrique selon la revendication 2, **caractérisé en ce que** la noix (9) est fixée à un disque (13) interposé entre ladite noix et une bride transversale (4) du piston (2) à laquelle est fixé le motoréducteur (1).

4. Vérin électrique selon l'une des revendications 1 à 3, **caractérisé en ce que** la noix (9) est en un matériau dur tel que l'acier et le corps tubulaire (3) en un matériau composite à haute tenue mécanique et très bon coefficient de glissement.

5. Vérin électrique selon l'une quelconque des revendications 1 à 4, **caractérisé en ce que** les moyens de blocage du piston (2) en rotation comportent un plot (17) fixé au piston et s'étendant transversalement à travers le corps tubulaire (3) dans la glissière longitudinale (18) du corps tubulaire (3).

6. Vérin électrique selon la revendication 5, **caractérisé en ce que** dans la paroi du corps (3) est logée une gaine (21) de protection d'un fil électrique (30) d'alimentation du moteur (1) s'étendant à l'intérieur d'un ressort hélicoïdal (22) formant une boucle (22a) dans la gaine (21), et **en ce que** cette gaine s'étend longitudinalement afin de recevoir une boucle formée par une partie de la longueur du fil, de telle sorte que cette boucle puisse se dérouler ou se reformer afin d'accompagner les mouvements de translation du moteur (1) et du piston (2), et **en ce que** des ouvertures (10) pour le passage du fil sont ménagées dans le corps (3), dans la paroi du piston (2) et dans le plot (17), ainsi que (25) dans la gaine (21) pour le raccordement au secteur.

7. Vérin électrique selon l'une quelconque des revendications 1 à 6, **caractérisé en ce qu'**il est équipé de moyens d'étanchéité.

8. Vérin électrique selon la revendication 7, **caractérisé en ce que** le piston (2) est muni d'un bouchon terminal (5) à son extrémité opposée à la noix (9), **en ce que** l'extrémité contiguë du corps (3) est pourvue d'une bague (28) du piston, et **en ce qu'**un joint d'étanchéité (29) est interposé entre la bague, le corps et le piston.

9. Vérin électrique selon la revendication 8, **caractérisé en ce que** l'extrémité du corps (3) opposée à ladite bague (28) est formée par un couvercle (26) muni d'un joint d'étanchéité (32) entre le couvercle et l'extrémité du corps.

10. Vérin électrique selon l'une quelconque des revendications 1 à 9, **caractérisé en ce que** la paroi du corps (3) comporte une chemise extérieure (33) enveloppant le corps tubulaire (3).

11. Vérin électrique selon la revendication 10, **caractérisé en ce que**, entre la chemise (33) et le corps (3), est ménagé un espace (35) contenant le fil électrique (30).

## Patentansprüche

1. Elektrischer Stellantrieb, der als einzige in einer Betatigungsrichtung des Stellantriebs verschiebbare Elemente einen feststehenden rohrförmigen Körper (3) und einen beweglichen Kolben (2) aufweist, der durch ein Rohr gebildet ist, das einen Elektromotor (1) einschließt, das im Innern des rohrförmigen Körpers (3) unter Zwischenanordnung von Drehblockademitteln gleitend angebracht ist, die in einer Gleitbahn in Längsrichtung des rohrförmigen Körpers (3) verschiebbar sind, und Verbindungsmittel (4, 9, 13) zwischen dem Elektromotor (1), der im Innern des Kolbens (2) angeordnet ist, und dem Kolben (2), um den Elektromotor (1) mit dem Kolben (2) fest zu verbinden, wobei sie mit der Innenwand des rohrförmigen Körpers (3) zusammenwirken, um den Kolben (2) und den Elektromotor (1) vorschieben und rückziehen zu können, wobei der rohrförmige Körper (3) und der Kolben (2) zylindrisch sind, und wobei der Motor (1) ein Getriebemotor ist, dessen eines Ende fest mit dem Kolben (2) verbunden ist, und dessen Abtriebswelle (8) dazu ausgelegt ist, eine Nuss (9) in Drehung zu versetzen, die mit einem Außengewinde (11) versehen ist, das im Eingriff mit einem komplementären Innengewinde (12) steht, das in der Innenwand des rohrförmigen Körpers (3) gebildet ist.

2. Elektrischer Stellantrieb nach Anspruch 1, **dadurch gekennzeichnet, dass** die Gewindestege (11a, 12a) des Außengewindes (11) der Nuss (9) und des komplementären Innengewindes (12) des Körpers (3) rechteckigen Querschnitt aufweisen, wobei zwischen den Gewindestegen des Außengewindes ein Spiel (j) bevorzugt in der Größenordnung von ungefähr 0,5 mm vorliegt.

3. Elektrischer Stellantrieb nach Anspruch 2, **dadurch gekennzeichnet, dass** die Nuss (9) an einer Scheibe (13) befestigt ist, die zwischen der Nuss und einem Querflansch (4) des Kolbens (2) angeordnet ist, wobei der Getriebemotor (1) an dem Flansch befestigt ist.

4. Elektrischer Stellantrieb nach einem der Ansprüche 1 bis 3, **dadurch gekennzeichnet, dass** die Nuss (9) aus einem harten Material, wie etwa Stahl besteht, und dass der rohrförmige Körper (3) aus einem Verbundstoffmaterial mit hoher mechanischer Widerstandsfähigkeit und sehr gutem Gleitkoeffizienten besteht.

5. Elektrischer Stellantrieb nach einem der Ansprüche 1 bis 4, **dadurch gekennzeichnet, dass** die Drehblockademittel für den Kolben (2) einen Klotz (17) umfassen, der am Kolben fest angebracht ist und sich quer zum rohrförmigen Körper (3) in der Langsgleitbahn (18) des rohrförmigen Körpers (3) erstreckt.

6. Elektrischer Stellantrieb nach Anspruch 5, **dadurch gekennzeichnet, dass** in der Wand des Körpers (3) ein Schutzschlauch (21) für eine elektrische Leitung (30) zur Stromversorgung des Motors (1) angeordnet ist, die sich im Innern einer Spiralfeder (22) erstreckt, die in dem Schutzschlauch (21) eine Schleife (22a) bildet, und dass dieser Schutzschlauch sich in Längsrichtung erstreckt, um eine Schleife aufzunehmen, die durch einen Teil der Länge der Leitung gebildet ist, so dass diese Schleife sich entrollen oder neu bilden kann, um die Translationsbewegung des Motors (1) und des Kolbens (2) aufzunehmen, und dass Offnungen (10) für den Hindurchtritt der Leitung in dem Körper (3), in der Wand des Kolbens (2) und dem Klotz (17) sowie in dem Schutzschlauch (21) für den Anschluss an das Stromnetz gebildet sind.

7. Elektrischer Stellantrieb nach einem der Ansprüche 1 bis 6, **dadurch gekennzeichnet, dass** er mit Dichtungsmitteln versehen ist.

8. Elektrischer Stellantrieb nach Anspruch 7, **dadurch gekennzeichnet, dass** der Kolben (2) mit einem Abschlussdeckel (5) an seinem Ende in Gegenüberlage zu der Nuss (9) gebildet ist, dass das angrenzende Ende des Körpers (3) mit einem Ring (28) des Kolbens versehen ist, und dass zwischen dem Ring, dem Körper und dem Kolben eine Dichtung (29) angeordnet ist.

9. Elektrischer Stellantrieb nach Anspruch 8, **dadurch gekennzeichnet, dass** das Ende des Körpers (3) in Gegenüberlage zu dem Ring (28) durch einen Deckel (26) gebildet ist, der mit einer Dichtung (32) zwischen dem Deckel und dem Ende des Körpers (2) versehen ist.

10. Elektrischer Stellantrieb nach einem der Ansprüche 1 bis 9, **dadurch gekennzeichnet, dass** die Wand des Körpers (3) einen Außenmantel (33) umfasst, der den rohrförmigen Körper (3) umhüllt.

11. Elektrischer Stellantrieb nach Anspruch 10, **dadurch gekennzeichnet, dass** zwischen dem Mantel (33) und dem Körper (3) ein Raum (35) gebildet ist, der die elektrische Leitung (30) enthält.

## Claims

1. Electrically operated cylinder comprising, as the only parts with relative movement in one direction of operation of the cylinder, a fixed tubular body (3) and a moving piston (2) made up of a tube enclosing an electric motor (1) fitted to slide inside the tubular body (3) through means for locking under rotation which can slide in a longitudinal direction slide of the tubular body (3) and means of connection (4, 9, 13) between the electric motor (1) housed inside the piston (2) and the piston (2) to make the electric motor (1) integral with the piston (2) and working in conjunction with the inside wall of the tubular body (3) to be able to push and pull the piston (2) and the electric motor (1), the tubular body (3) and the piston (2) being cylindrical and the motor (1) being a motor reduction unit, one end of which is integral with the piston (2) and an output shaft of which (8) is suitable for driving round a nut clamp (9) with a thread (11) engaging with a complementary tapping (12) arranged on the inside wall of the tubular body (3).

2. Electrically operated cylinder according to Claim 1, **characterised in that** the teeth (11a, 12a) of the thread (11) of the nut clamp (9) and of the complementary tapping (12) of the body (3) have rectangular sections with play (j) between the teeth of the threads preferably in the region of about 0.5 mm.

3. Electrically operated cylinder according to Claim 2, **characterised in that** the nut clamp (9) is fixed to a disc (13) inserted between the said nut clamp and a transverse flange (4) of the piston (2) to which the motor reduction unit (1) is fixed.

4. Electrically operated cylinder according to one of the Claims 1 to 3, **characterised in that** the nut clamp (9) is made from a hard material such as steel and the tubular body (3) from a composite material with high mechanical strength and a very good coefficient of sliding.

5. Electrically operated cylinder according to any one of the Claims 1 to 4, **characterised in that** the means of locking the rotating piston (2) consist of a contact (17) fixed to the piston and extending transversely through the tubular body (3) in the longitudinal slide (18) of the tubular body (3).

6. Electrically operated cylinder according to Claim 5, **characterised in that**, in the wall of the body (3) there is housed a sheath (21) protecting an electric wire (30) supplying the motor (1), extending to the inside of a helical spring (22) forming a loop (22a) in the sheath (21), and by the fact that this sheath extends longitudinally to take a loop formed by a part of the length of the wire in such a way that this loop can be unwound or reformed to accompany the linear movements of the motor (1) and of the piston (2), and by the fact that openings (10) for the wire to pass through are made in the body (3), in the wall of the piston (2) and in the contact (17), as well as (25) in the sheath (21) for connection to the mains.

7. Electrically operated cylinder according to any one of the Claims 1 to 6, **characterised in that** it is fitted with seals.

8. Electrically operated cylinder according to Claim 7, **characterised in that** the piston (2) has an end plug (5) at its end opposite the nut clamp (9), **in that** the adjacent end of the body (3) is provided with a piston bush (28), and **in that** a seal (29) is inserted between the bush, the body and the piston.

9. Electrically operated cylinder according to Claim 8, **characterised in that** the end of the body (3) opposite the said bush (28) is formed by a cover (26) fitted with a seal (32) between the cover and the end of the body.

10. Electrically operated cylinder according to any one of the Claims 1 to 9, **characterised in that** the wall of the body (3) has an outer liner (33) surrounding the tubular body (3).

11. Electrically operated cylinder according to Claim 10, **characterised in that**, between the liner (33) and the body (3), there is a space (35) containing the electric wire (30).
